# EUROPÄISCHE PATENTANMELDUNG

(11) **EP 3 219 528 A1**
(43) Veröffentlichungstag der Anmeldung: **20.09.2017**
(21) Anmeldenummer: 17157263.9
(22) Anmeldetag: 21.02.2017
(51) Int. Cl.: B60J 7/05, B60J 7/02

(54) **SCHIEBEDACHSYSTEM FÜR EIN KRAFTFAHRZEUG**

(30) Priorität: 10.03.2016 DE 102016203934
(71) Anmelder: BOS GmbH & Co. KG, 73760 Ostfildern (DE)
(72) Erfinder: Stapler, Waldemar, 71032 Böblingen (DE)
(74) Vertreter: Patentanwälte Ruff, Wilhelm, Beier, Dauster & Partner mbB

(57) **Zusammenfassung**

Ein Schiebedachsystem für ein Kraftfahrzeug mit einem beweglichen Dachteil, der zwischen einer Schließstellung, einer Lüftungsstellung und einer Öffnungsstellung relativ zu einem fahrzeugfesten Dachrahmenmodul verlagerbar ist, sowie mit einem Antriebssystem, das zur Verlagerung des Dachteils wenigstens ein Trägerprofil aufweist, ist bekannt.
Erfindungsgemäß ist ein Steuerhebel mit wenigstens einer Stützrolle versehen, die auf einem Boden der Führungsschienenanordnung abgestützt ist, und der Boden der Führungsschienenanordnung weist eine Aufnahme auf, in die die Stützrolle eintaucht, wenn der Rastnocken in der Rastaussparung aufgenommen ist.
Einsatz für Schiebedächer von Personenkraftwagen.

## Beschreibung

Die Erfindung betrifft ein Schiebedachsystem für ein Kraftfahrzeug mit einem beweglichen Dachteil, der zwischen einer Schließstellung, einer Lüftungsstellung und einer Öffnungsstellung relativ zu einem fahrzeugfesten Dachrahmenmodul verlagerbar ist, sowie mit einem Antriebssystem, das zur Verlagerung des Dachteiles wenigstens ein Trägerprofil aufweist, das fest mit dem Dachteil verbunden ist, und das frontseitig an einem Ausgleichshebel angelenkt ist, der an einem frontseitigen Lagerschlitten schwenkbeweglich gelagert ist und längs einer fahrzeugfesten Führungsschienenanordnung nach hinten erstreckt und in einer Schiebeführung eines Antriebsschlittens geführt ist, der mit einem Antriebsübertragungsmittel verbunden ist, und das einen Steuerhebel aufweist, der frontseitig an dem Lagerschlitten gelagert ist, der durch den Antriebsschlitten mitnehmbar ist und der sich längs der Führungsschienenanordnung nach hinten erstreckt, wobei der Steuerhebel einen Rastnocken aufweist, der in einer Rastaussparung der Führungsschienenanordnung formschlüssig aufnehmbar ist.

Ein Schiebedachsystem für ein Kraftfahrzeug ist aus der DE 10 2011 085 177 A1 bekannt. Das Schiebedachsystem weist ein Antriebssystem auf, um auf gegenüberliegenden Längsseiten eines beweglichen Dachteiles jeweils ein Trägerprofil zu verlagern, an denen der bewegliche Dachteil angebracht ist. Das Antriebssystem weist im Bereich jeder der beiden Antriebsseiten für das jeweilige Trägerprofil jeweils einen Antriebsschlitten auf, der über ein Antriebsübertragungskabel mit einer Antriebseinheit in Wirkverbindung steht. Dem Trägerprofil ist ein Ausgleichshebel zugeordnet, der an dem Antriebsschlitten verschiebbar geführt ist. Rückseitig ist das Trägerprofil an einem Zwischenhebel angelenkt, der mit einem Hilfsschlitten schwenkbeweglich verbunden ist. Der Hilfsschlitten wie auch der Antriebsschlitten sind in einer Führungsschienenanordnung längsverfahrbar gelagert.

Aufgabe der Erfindung ist es, ein Schiebdachsystem der eingangs genannten Art zu schaffen, das eine sichere Funktion aufweist und eine geräuscharme Verlagerung des beweglichen Dachteiles zwischen der Schließstellung und der Öffnungsstellung ermöglicht.

Diese Aufgabe wird dadurch gelöst, dass der Steuerhebel mit wenigstens einer Stützrolle versehen ist, die auf einem Boden der Führungsschienenanordnung abgestützt ist, und dass der Boden der Führungsschienenanordnung eine Aufnahme aufweist, in die die Stützrolle eintaucht, wenn der Rastnocken in der Rastaussparung aufgenommen ist. Die erfindungsgemäße Lösung ermöglicht zum einen eine sichere Stützung des Trägerprofils, wenn das Trägerprofil gemeinsam mit dem beweglichen Dachteil aus der Schließstellung in die Lüftungsstellung angehoben oder aus der Lüftungsstellung wieder abgesenkt wird. Zum anderen gewährleistet die Stützrolle, dass bei einer Verlagerung des Antriebsschlittens nach hinten und einer entsprechenden Verlagerung des Dachteiles in Längsrichtung der Führungsschienenanordnung der Rastnocken nicht auf dem Boden der Führungsschienenanordnung entlangschleift. Hierdurch wird zum einen eine reduzierte Geräuschbildung erreicht. Zum anderen ergibt sich eine erhebliche Verschleißreduzierung insbesondere für den Rastnocken, so dass die Funktionsfähigkeit des Rastnockens und des Antriebssystems auch bei einer Vielzahl von Öffnungs- und Schließvorgängen des Dachteiles erhalten bleibt. Schließlich kann der Steuerhebel reibungsarm geschleppt werden, wenn er nicht durch den Antriebsschlitten beaufschlagt ist. In vorteilhafter Weise weist das Antriebssystem zwei Antriebsseiten an gegenüberliegenden Längsseiten des beweglichen Dachteiles auf, die jeweils eine Führungsschienenanordnung, ein Trägerprofil, einen Antriebsschlitten, einen Ausgleichshebel, einen Lagerschlitten und einen Steuerhebel umfassen. Zudem ist jeder der beiden Antriebsschlitten über jeweils ein Antriebsübertragungsmittel in Form eines flexiblen Steigungskabels in der Führungsschienenanordnung längsverfahrbar. Die beiden Antriebsübertragungsmittel werden über eine zentrale Antriebseinheit synchron zueinander angetrieben. Beide Antriebsseiten sind funktional identisch zueinander gestaltet. Die entsprechend paarweise vorhandenen Funktionskomponenten der beiden Antriebsseiten sind spiegelsymmetrisch zu einer vertikalen Fahrzeugmittellängsebene, im Übrigen jedoch identisch zueinander ausgeführt. Die beiden Führungsschienenanordnungen sind in einem Dachrahmenmodul integriert, das fahrzeugfest im Bereich eines Dachausschnittes eines Fahrzeugdaches des Kraftfahrzeugs montierbar ist. Dabei kann das Schiebedachsystem mit dem Dachrahmenmodul als vormontierte Baueinheit dem Dachbereich zugeführt und dort fahrzeugfest montiert werden. Die erfindungsgemäße Lösung eignet sich in besonders vorteilhafter Weise für den Einsatz in einem Dachbereich eines Personenkraftwagens.

In Ausgestaltung der Erfindung ist die Stützrolle derart dimensioniert und an dem Steuerhebel gelagert, dass der Rastnocken berührungslos zu einer Begrenzungsfläche der Führungsschienenanordnung positioniert ist, wenn die Stützrolle auf dem Boden der Führungsschienenanordnung abgestützt ist. Die Rastaussparung für den Rastnocken kann entweder in derselben Ebene der Führungsschienenanordnung vorgesehen sein wie die Aussparung für die Stützrolle, oder aber im Bereich einer anderen Begrenzungsfläche der Führungsschienenanordnung. In vorteilhafter Weise ist eine Aufstands- und Rollfläche der Stützrolle derart zu der Unterseite des Steuerhebels beabstandet, dass die Unterseite des Steuerhebels selbst nicht auf dem Boden der Führungsschienenanordnung entlanggleitet, sondern von der Stützrolle getragen wird. Zum anderen stützt sich die Stützrolle derart auf dem Boden der Führungsschienenanordnung ab, dass auch der an dem Steuerhebel angeordnete Rastnocken frei getragen wird und nicht mit einer entsprechenden Begrenzungsfläche der Führungsschienenanordnung in Kontakt ist. Als Begrenzungsfläche der Führungsschienenanordnung kann entweder der Boden der Führungsschienenanordnung oder eine andere Begrenzungsfläche einer anderen Führungsebene der Führungsschienenanordnung vorgesehen sein. Letzteres für den Fall, dass die Rastaussparung für den Rastnocken sich im Bereich einer anderen Begrenzungsfläche der Führungsschienenanordnung befindet als in dem Boden.

In weiterer Ausgestaltung der Erfindung weist der Steuerhebel endseitig eine Fangkulisse auf, die zur Aufnahme einer Steuerkontur des Antriebsschlittens vorgesehen ist, und die Stützrolle ist benachbart zu der Fangkulisse im Bereich einer Unterseite des Steuerhebels angeordnet. Damit ist die Stützrolle im Bereich eines rückseitigen Endes des Steuerhebels positioniert, der an einem frontseitigen Endbereich schwenkbeweglich gelagert ist.

In weiterer Ausgestaltung der Erfindung weist die Stützrolle einen gummielastischen Außenmantel auf. Der Außenmantel ist aus einem Elastomer oder einem thermoplastischen Elastomer hergestellt und kann nach Art eines Reifens oder Rings auf ein Trägerrad der Stützrolle aufgebracht sein. Alternativ kann der gummielastische Außenmantel durch eine Beschichtung auf einen Außenumfang des Trägerrades aufgebracht sein. Durch den gummielastischen Außenmantel wird zum einen eine Federungs- und Dämpfungsfunktion für den Steuerhebel erreicht. Zum anderen wird durch den gummielastischen Außenmantel eine Rollreibungsfunktion relativ zu dem Boden der Führungsschienenanordnung verbessert, der vorzugsweise aus einer Leichtmetalllegierung besteht und daher Teil der aus einer Leichtmetalllegierung hergestellten Führungsschienenanordnung ist.

In weiterer Ausgestaltung der Erfindung ist die Stützrolle mittels eines Lagerbolzens in einer Lageraufnahme des Steuerhebels drehbar gelagert. Der Lagerbolzen ist in der Lageraufnahme des Steuerhebels kraft-, form- oder stoffschlüssig gehalten.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform eines erfindungsgemäßen Schiebedachsystems,
- Fig. 2: in einer Seitenansicht eine Antriebsseite des Schiebedachsystems nach Fig. 1,
- Fig. 3: die Antriebsseite gemäß Fig. 2 in perspektivischer Darstellung,
- Fig. 4: die Antriebsseite des Schiebedachsystems gemäß Fig. 2 in einer weiteren Funktionsstellung,
- Fig. 5: die Antriebsseite nach Fig. 4 in perspektivischer Darstellung,
- Fig. 6: die Antriebsseite nach den Fig. 2 und 4 in einer weiteren Funktionsstellung, gegenüber der Funktionsstellung nach Fig. 4 in Fahrzeuglängsrichtung nach hinten verfahren,
- Fig. 7: die Antriebsseite nach Fig. 6 in perspektivischer Darstellung und
- Fig. 8: die Antriebsseite gemäß den Fig. 2 bis 7 des Schiebedachsystems nach Fig. 1 in einer perspektivischen Explosionsdarstellung.

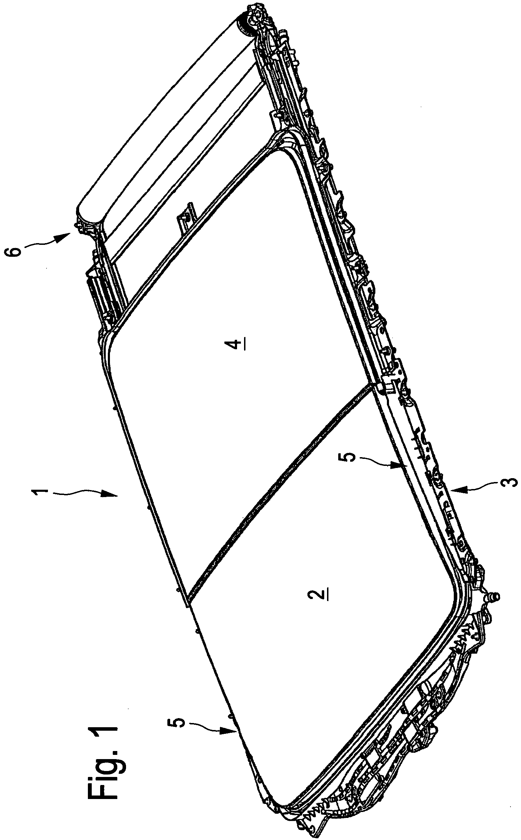

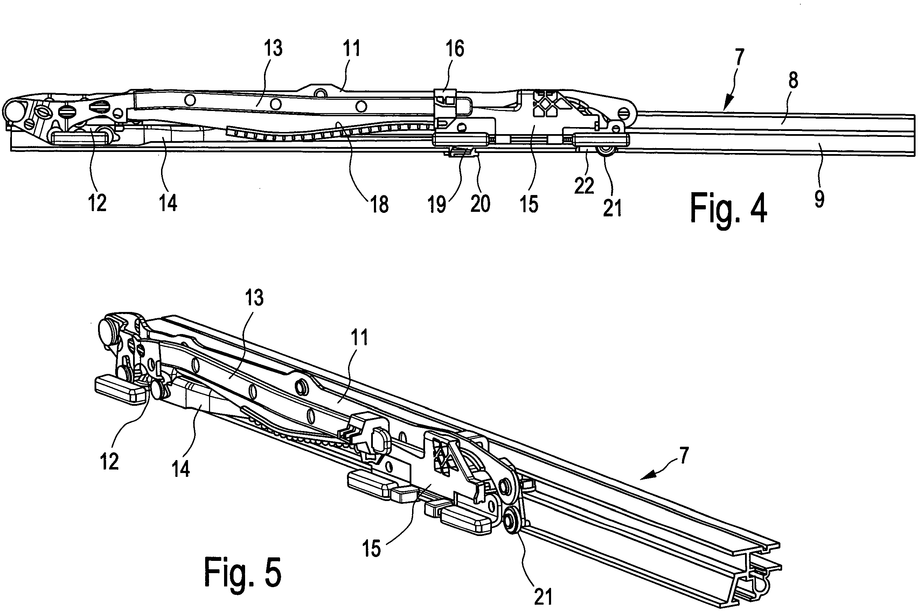

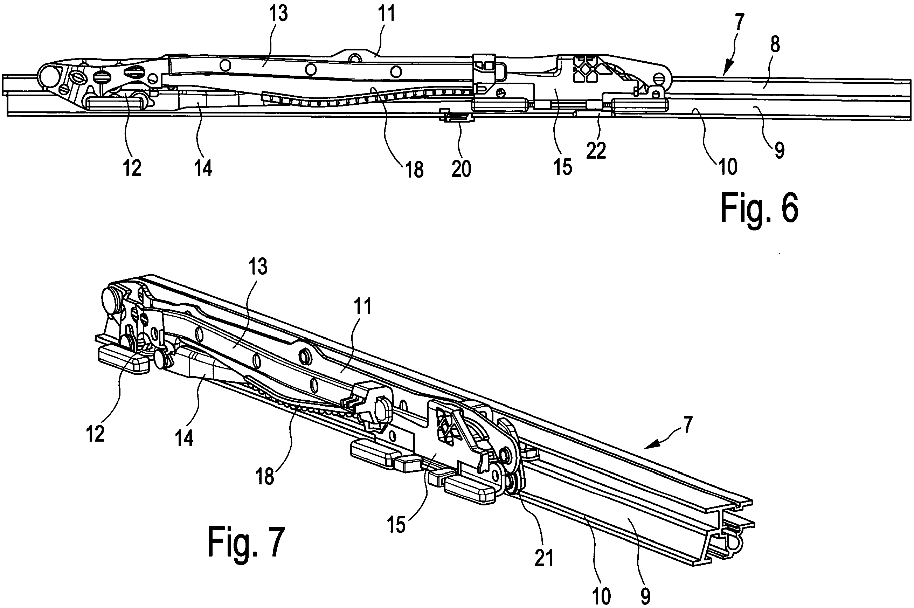

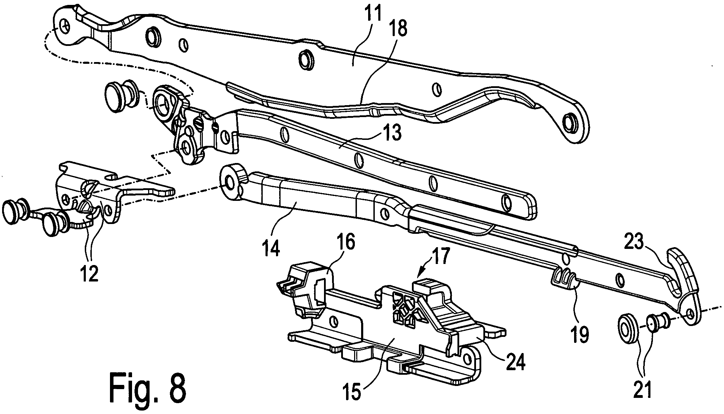

Ein Schiebedachsystem 1 nach den Fig. 1 bis 8 weist einen beweglichen Dachteil 2 auf, der in einer Schließstellung gemäß Fig. 1 einen Dachausschnitt verschließt, der innerhalb eines Dachrahmenmoduls 3 vorgesehen ist. Das Dachrahmenmodul 3 ist dazu vorgesehen, in einem ausgeschnittenen Dachbereich eines Personenkraftwagens montiert zu werden, um einen Fahrzeuginnenraum des Personenkraftwagens mit einem öffnungsfähigen Schiebedachsystem 1 zu versehen. Das Dachrahmenmodul 3 ist auf gegenüberliegenden Längsseiten mit jeweils einer Antriebsseite 5 versehen, die Teil eines Antriebssystems sind, um den beweglichen Dachteil 2 aus der Schließstellung gemäß Fig. 1 in eine schräg nach oben ausgestellte Lüftungsstellung und in eine in Fahrzeuglängsrichtung nach hinten verlagerte Öffnungsstellung zu überführen. In der Öffnungsstellung ist der bewegliche Dachteil 2 unterhalb eines feststehenden Dachabschnittes 4 des Dachrahmenmoduls 3 positioniert. Rückseitig weist das Dachrahmenmodul 3 zudem eine Beschattungsvorrichtung 6 auf. Die Beschattungsvorrichtung 6 ist vorgesehen, weil sowohl der bewegliche Dachteil 2 als auch der feststehende Dachabschnitt 4 aus einem zumindest abschnittsweise transparenten Glasmaterial hergestellt sind.

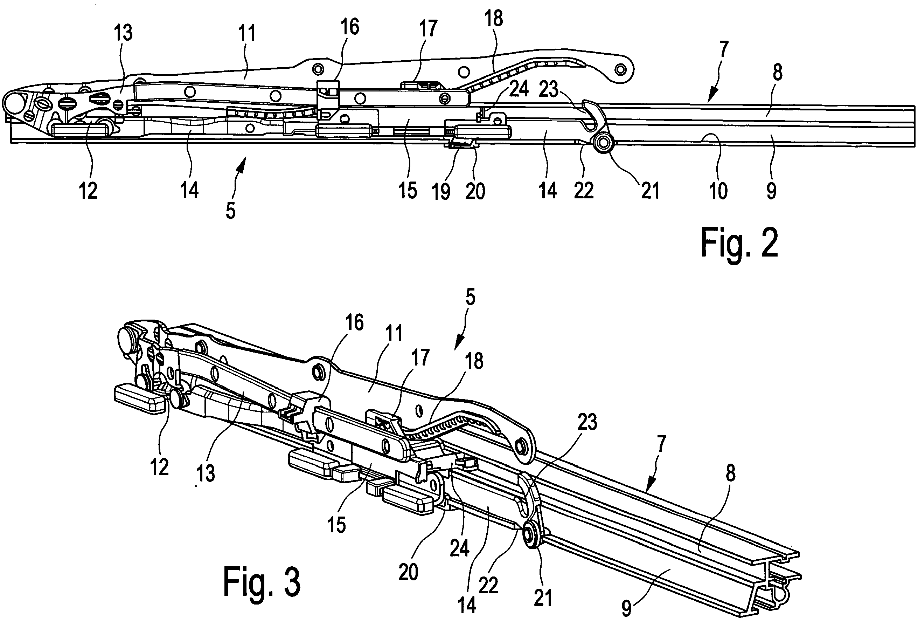

Jede der beiden Antriebsseiten 5 ist gemäß den Fig. 2 bis 8 ausgeführt, wobei anhand der Fig. 2 bis 8 eine - in normaler Fahrrichtung des Personenkraftwagens gesehen - linke Antriebsseite 5 dargestellt ist. Die gegenüberliegende Antriebsseite 5 ist funktional identisch gestaltet. Entsprechende Funktionskomponenten der rechten Antriebsseite 5 sind spiegelsymmetrisch zu einer vertikalen Fahrzeugmittellängsebene, im Übrigen jedoch identisch zu den Funktionskomponenten der linken Antriebsseite 5 angeordnet und gestaltet. Nachfolgend wird lediglich die - in normaler Fahrtrichtung gesehen - linke Antriebsseite 5 näher beschrieben. Das Beschriebene gilt in gleicher Weise für die rechte Antriebsseite 5.

Beide Antriebsseiten werden über eine nicht näher bezeichnete zentrale Antriebseinheit des Antriebssystems synchron zueinander beaufschlagt. Die zentrale Antriebseinheit weist einen in einem Frontbereich des Dachrahmenmoduls 3 untergebrachten Elektromotor mit einem zugeordneten Getriebe auf, der synchron auf zwei Antriebsübertragungsmittel in Form von flexiblen Steigungskabeln einwirkt, die in dem Dachrahmenmodul 3 zu den gegenüberliegenden Antriebsseiten 5 hin verlegt sind. Jedes Steigungskabel ist im Bereich der entsprechenden Längsseite des beweglichen Dachteiles 2 und des Dachrahmenmoduls 3 in jeweils einer Führungsschienenanordnung 7 verlegt und mit einem Antriebsschlitten 15 verbunden, der in der Führungsschienenanordnung 7 in Fahrzeuglängsrichtung längsverfahrbar geführt ist.

Die Antriebseite 5 weist ein Trägerprofil 11 auf, das längserstreckt und hochkant ausgerichtet ist und über nahezu eine gesamte Länge des beweglichen Dachteiles 2 mit einem linken Seitenbereich des Dachteiles 2 fest verbunden ist. Eine Verlagerung des Trägerprofils 11 jeder Antriebsseite 5 bewirkt demzufolge zwangsläufig eine entsprechende Verlagerung des beweglichen Dachteiles 2. Das Trägerprofil 11 ist frontseitig (auf eine Ausrichtung in Fahrzeuglängsrichtung bezogen) mit einem Ausgleichshebel 13 schwenkbeweglich verbunden. Eine entsprechende Schwenkachse des Schwenkgelenks ist in Fahrzeugquerrichtung erstreckt. Der Ausgleichshebel 13 ist an einem Lagerschlitten 12 mittels eines weiteren Gelenkpunktes schwenkbeweglich gelagert. Die Lagerung des Ausgleichshebels 13 an dem Lagerschlitten 12 ist nach unten und nach hinten zu dem Schwenkgelenk für das Trägerprofil 11 beabstandet. Der Lagerschlitten 12 ist mit Hilfe entsprechender Gleitelemente gleitbeweglich in der Führungsschienenanordnung 7 längsverschiebbar gelagert. Dabei weist die Führungsschienenanordnung 7 zwei übereinander angeordnete Führungsebenen 8, 9 auf, von denen die Führungsebene 8 eine obere Führungsebene und die Führungsebene 9 eine untere Führungsebene bilden. Der Lagerschlitten 12 ist mit einem außenliegenden Gleitelement in der unteren Führungsebene 9 und mit innenliegenden Gleitelementen in der oberen Führungsebene 8 geführt. In Abstand hinter dem Lagerschlitten 12 ist der Antriebsschlitten 15 gleitbeweglich verschiebbar in der Führungsschienenanordnung 7 gelagert. Auch der Antriebsschlitten 15 weist Gleitelemente auf, die in der unteren Führungsebene 9 geführt sind, sowie weitere Gleitelemente, die in der oberen Führungsebene 8 geführt sind. Analog dem Lagerschlitten 12 sind auch bei dem Antriebsschlitten 15 die außenliegenden Gleitelemente im Bereich der unteren Führungsebene 9 und die innenliegenden Gleitelemente im Bereich der oberen Führungsebene 8 positioniert. Der Ausgleichshebel 13 ist in einer Schiebeführung 16 des Antriebsschlittens 15 im Wesentlichen linearbeweglich verschiebbar geführt. Dadurch ist eine Relativbeweglichkeit zwischen dem Ausgleichshebel 13 und dem Antriebsschlitten 15 gegeben. Der Antriebsschlitten 15 umgreift mittels einer Kulissenführung 17 eine Steuerkulisse 18 des Trägerprofils 11, die zum Anheben und Absenken des Trägerprofils 11 um die frontseitige Schwenkachse am Ausgleichshebel 13 dient. Das Trägerprofil 11 ist demzufolge in Abstand zu seiner frontseitigen Schwenkachse auf dem Antriebsschlitten 15 abgestützt.

An dem Lagerschlitten 12 ist zudem ein Steuerhebel 14 angelenkt, der sich innerhalb der Führungsschienenanordnung 7 in Fahrzeuglängsrichtung nach hinten erstreckt. Der Steuerhebel 14 ist an einem hinter dem Gelenkpunkt für den Ausgleichshebel 13 angeordneten Lagerpunkt an dem Lagerschlitten 12 um eine in Fahrzeugquerrichtung erstreckte Schwenkachse schwenkbeweglich gelagert. Der Steuerhebel 14 dient dazu, den Lagerschlitten 12 gemeinsam mit dem Ausgleichshebel 13 und dem vorderen Endbereich des Trägerprofils 11 gegen eine Verlagerung in Fahrzeuglängsrichtung, d. h. in Längsrichtung der Führungsschienenanordnung 7, zu sichern bzw. die entsprechenden Funktionskomponenten für eine Verlagerung in Längsrichtung freizugeben. Hierzu weist der Steuerhebel 14 in Abstand hinter dem Lagerpunkt einen Rastnocken 19 auf, der in bestimmten Funktionsstellungen des Trägerprofils 11 und des Steuerhebels 14 in eine Rastaussparung 19 in einem Boden 10 der Führungsschienenanordnung 7 eintaucht. Hierdurch ist der Steuerhebel 14 gegen eine Verlagerung in Längsrichtung der Führungsschienenanordnung 7 zwangsläufig formschlüssig gesichert. Damit ist auch der Lagerschlitten 12 gegen eine Verlagerung in Längsrichtung der Führungsschienenanordnung 7 blockiert. Da an dem Lagerschlitten 12 der Ausgleichshebel 13 und an diesem das Trägerprofil 11 angelenkt ist, ist auch das Trägerprofil 11 gegen eine Verlagerung in Fahrzeuglängsrichtung nach hinten gesichert. An einem zu dem Lagerpunkt gegenüberliegenden, hinteren Stirnendbereich weist der Steuerhebel 14 zudem eine hakenartige Fangkulisse 23 auf, die in einen Bewegungsweg einer Steuerkontur 24 des Antriebsschlittens 15 hineinragt. Die Fangkulisse 23 ist derart schräg ausgerichtet, dass die Steuerkontur 24 des Antriebsschlittens 15 bei einem Anschlagen an einen schrägen Rand der Fangkulisse 23 zwangsläufig den Steuerhebel 14 nach oben verschwenkt, wodurch der Rastnocken 19, der im Bereich der Unterseite des Steuerhebels 14 an diesem fest angeordnet ist, aus der Rastaussparung 20 im Boden 10 der Führungsschienenanordnung 7 frei kommt.

Der Steuerhebel 14 weist unterhalb der Fangkulisse 23 zudem eine Stützrolle 21 auf, die mittels eines Lagerbolzens in einer Lageraufnahme des rückseitigen Stirnendbereichs des Steuerhebels 14 drehbar gelagert ist. Die Stützrolle 21 ist um eine in Fahrzeugquerrichtung und damit parallel zu einer Schwenkachse des Steuerhebels 14 erstreckte Drehachse drehbar an dem Steuerhebel 14 gelagert. Die Stützrolle 21 ragt derart über eine untere Randkontur des Steuerhebels 14 nach unten ab, dass die Stützrolle 21 bei einem Entlangrollen auf dem Boden 10 der Führungsschienenanordnung 7 den Steuerhebel 14 in Abstand zu dem Boden 10 der Führungsschienenanordnung 7 gestützt hält. Der Abstand ist so gewählt, dass bei einer Abstützung des Steuerhebels 14 auf dem Boden 10 der Führungsschienenanordnung 7 durch die Stützrolle 21 der Rastnocken 19 berührungslos in geringem Abstand oberhalb des Bodens 10 der unteren Führungsebene 9 der Führungsschiene 7 positioniert ist. Wenn die Stützrolle 21 daher auf dem Boden 10 der Führungsschienenanordnung 7 abrollt, ist eine Aufstandsfläche der Stützrolle 21 die einzige Stützfläche, auf der der Steuerhebel 14 mit dem Boden 10 der Führungsschienenanordnung 7 in Kontakt steht. Eine Unterseite des Rastnockens 19 ist in geringem Abstand oberhalb des Bodens 10 positioniert und schwebt gleichermaßen über dem Boden 10.

Um trotz der Stützrolle 21 ein Eintauchen des Rastnockens 19 in die Rastaussparung 20 des Bodens 10 der Führungsschienenanordnung 7 zu ermöglichen, ist in dem Boden 10 der Führungsschienenanordnung 7 eine Aufnahme 22 vorgesehen, in die die Stützrolle 21 nach unten eintauchen kann. Die Aufnahme 22 ist in einem Abstand in Längsrichtung der Führungsschienenanordnung 7 hinter der Rastaussparung 20 in dem Boden 10 der Führungsschienenanordnung 7 vorgesehen, der zumindest weitgehend dem Abstand der Stützrolle 21 zu dem Rastnocken 19 entspricht. Während eine Aufnahmekontur der Rastaussparung 20 zumindest weitgehend formschlüssig an eine Außenkontur des Rastnockens 19 des Steuerhebels 14 angepasst ist, ist die Aufnahme 22 wesentlich größer als eine Querschnittsfläche der Stützrolle 21. Die Aufnahme 22 ist derart lang und breit gestaltet, dass die Stützrolle 21 sowohl in Querrichtung als auch in Längsrichtung der Führungsschienenanordnung 7 gemeinsam mit einem entsprechenden Halteabschnitt des rückseitigen Stirnendbereichs des Steuerhebels 14 in die Aufnahme 22 nach unten eintauchen kann. Eine entsprechende Dimensionierung der Aufnahme 22 ist anhand der Fig. 2 bis 7 erkennbar, wobei die Größenverhältnisse zwischen der Stützrolle 21, dem Steuerhebel 14 und der Aufnahme 22 maßstabsgetreu sind.

Wenn das Trägerprofil aus einer Schließstellung des Dachteils in eine Lüftungsstellung überführt werden soll, wird der Antriebsschlitten 15 in der Führungsschienenanordnung 7 nach vorne verfahren. Dadurch drückt die Kulissenführung 17 über die Steuerkulisse 18 das Trägerprofil 11 zwangsläufig nach oben, während das Trägerprofil über den Ausgleichshebel 13 und den Lagerschlitten 12 in Längsrichtung der Führungsschienenanordnung 7 gesichert bleibt. Der Lagerschlitten 12 ist durch den Steuerhebel 14 blockiert, der mittels seines Rastnockens 19 in der Rastaussparung 20 in Längsrichtung arretiert ist. Wenn der Antriebsschlitten 15 seine Bewegungsrichtung umkehrt, indem das entsprechende Steigungskabel des Antriebssystems in entgegengesetzter Richtung nach hinten bewegt wird, verfährt der Antriebsschlitten 15 innerhalb der Führungsschienenanordnung 7 nach hinten und zieht über die Kulissenführung 17 und die Steuerkulisse 18 das Trägerprofil 11 zwangsläufig nach unten. Sobald der Antriebsschlitten 15 mit seiner in Verfahrrichtung frontseitigen Steuerkontur 24 die Fangkulisse 23 des Steuerhebels 14 erreicht hat, wird der Steuerhebel 14 zwangsläufig nach oben ausgesteuert, wodurch der Rastnocken 19 und die Stützrolle 21 aus dem Boden 10 in der Führungsschienenanordnung 7 frei kommen. Nun kann eine weitere Verfahrbewegung des Antriebsschlittens 15 nach hinten den Steuerhebel 14 und damit auch den Lagerschlitten 12 mitnehmen, wodurch das Trägerprofil 11 in seine Öffnungsstellung verfahren wird, in der der bewegliche Dachteil 2 unterhalb des feststehenden Dachbereiches 4 positioniert ist. Dabei rollt die Stützrolle 21 auf dem Boden 10 der Führungsschienenanordnung 7 ab. Der Rastnocken 19 wird frei getragen. Wenn der Antriebsschlitten 15 ausgehend von der Öffnungsstellung des Trägerprofils 11 wieder innerhalb der Führungsschienenanordnung 7 nach vorne verfahren wird, so nimmt der Antriebsschlitten zunächst das Trägerprofil 11 mit, bis der Rastnocken 19 wieder in die Rastaussparung 20 eintaucht. Der Antriebsschlitten 15 ist nun relativ zu dem Steuerhebel 14 frei und kann weiter nach vorne verfahren werden, bis das Trägerprofil 11 die Schließstellung des Dachteiles 2 erreicht hat, in der das Trägerprofil 11 geringfügig nach oben geschwenkt ist, um den Dachteil 2 bündig mit dem feststehenden Dachbereich 4 in dem Dachausschnitt des Dachrahmenmoduls 3 zu positionieren.

## Patentansprüche

1. Schiebedachsystem (1) für ein Kraftfahrzeug mit einem beweglichen Dachteil (2), der zwischen einer Schließstellung, einer Lüftungsstellung und einer Öffnungsstellung relativ zu einem fahrzeugfesten Dachrahmenmodul (3) verlagerbar ist, sowie mit einem Antriebssystem, das zur Verlagerung des Dachteils (2) wenigstens ein Trägerprofil (11) aufweist, das fest mit dem Dachteil (2) verbunden ist, und das frontseitig an einem Ausgleichshebel (13) angelenkt ist, der an einem frontseitigen Lagerschlitten (12) schwenkbeweglich gelagert ist und längs einer fahrzeugfesten Führungsschienenanordnung (7) nach hinten erstreckt und in einer Schiebeführung (16) eines Antriebsschlittens (15) geführt ist, der mit einem Antriebsübertragungsmittel verbunden ist, und das einen Steuerhebel (14) aufweist, der frontseitig an dem Lagerschlitten (12) gelagert ist, der durch den Antriebsschlitten (15) mitnehmbar ist, und der sich längs der Führungsschienenanordnung (7) nach hinten erstreckt, wobei der Steuerhebel (14) einen Rastnocken (19) aufweist, der in einer Rastaussparung (20) der Führungsschienenanordnung (7) formschlüssig aufnehmbar ist, **dadurch gekennzeichnet, dass** der Steuerhebel (14) mit wenigstens einer Stützrolle (21) versehen ist, die auf einem Boden (10) der Führungsschienenanordnung (7) abgestützt ist, und dass der Boden (10) der Führungsschienenanordnung (7) eine Aufnahme (22) aufweist, in die die Stützrolle (21) eintaucht, wenn der Rastnocken (19) in der Rastaussparung (20) aufgenommen ist.

2. Schiebedachsystem nach Anspruch 1, **dadurch gekennzeichnet, dass** die Stützrolle (21) derart dimensioniert und an dem Steuerhebel (14) gelagert ist, dass der Rastnocken (19) berührungslos zu einer Begrenzungsfläche der Führungsschienenanordnung (7) positioniert ist, wenn die Stützrolle (21) auf dem Boden (10) der Führungsschienenanordnung abgestützt ist.

3. Schiebedachsystem nach einem der vorhergehenden Ansprüche, **dadurch gekennzeichnet, dass** der Steuerhebel (14) endseitig eine Fangkulisse (23) aufweist, die zur Aufnahme einer Steuerkontur (24) des Antriebsschlittens (15) vorgesehen ist, und dass die Stützrolle (21) benachbart zu der Fangkulisse (23) im Bereich einer Unterseite des Steuerhebels (14) angeordnet ist.

4. Schiebedachsystem nach einem der vorhergehenden Ansprüche, **dadurch gekennzeichnet, dass** die Stützrolle (21) einen gummielastischen Außenmantel aufweist.

5. Schiebedachsystem nach Anspruch 4, **dadurch gekennzeichnet, dass** die Stützrolle (21) mittels eines Lagerbolzens in einer Lageraufnahme des Steuerhebels (14) drehbar gelagert ist.
